Europäisches Patentamt

European Patent Office

Office européen des brevets

(19)

(11) Veröffentlichungsnummer: **0 200 910**
**A2**

(12) # EUROPÄISCHE PATENTANMELDUNG

(21) Anmeldenummer: **86104246.3**

(51) Int. Cl.⁴: **G 01 K 1/14**

(22) Anmeldetag: **27.03.86**

(30) Priorität: **10.05.85 DE 3516815**

(43) Veröffentlichungstag der Anmeldung: **12.11.86**
**Patentblatt 86/46**

(84) Benannte Vertragsstaaten: **AT BE CH DE FR GB IT LI LU NL SE**

(71) Anmelder: **Rheinische Braunkohlenwerke AG., Stüttgenweg 2, D-5000 Köln 41 (DE)**

(72) Erfinder: **Lambertz, Johannes, Dr.-Ing. Dipl., Jägerring 22, D-5014 Kerpen-Manheim (DE)**
Erfinder: **Sievernich, Mathias, Dipl.-Ing. (FH), Fasenenweg 11, D-5354 Weilerswist/Hausweiler (DE)**

(74) Vertreter: **Koepsell, Helmut, Dipl.-Ing., Mittelstrasse 7, D-5000 Köln 1 (DE)**

(54) **Thermoelement für einen unter erhöhter Temperatur und Überdruck betriebenen Rekationsraum.**

(57) Ein einem unter erhöhter Temperatur und Überdruck betriebenen Reaktionsraum (8) zugeordnetes Thermoelement (14) ist zwischen einer Position, in welcher es sich im Reaktionsraum (8) befindet, und einer gegenüber dem Reaktionsraum (8) zurückgezogenen Position bewegbar. Die Wandung des Reaktionsraumes (8) ist mit einer Öffnung (5) für den Durchgang des Thermoelementes (14) und einer dieser Öffnung zugeordneten Abdichtung in Form eines Faltenbalges (38) versehen, der innerhalb eines Gehäuses (7) angeordnet ist, das sich nach außen an die Öffnung (5) in der Wandung des Reaktionsraumes anschließt und an seiner dem Reaktionsraum (8) abgekehrten Stirnwand mit einem Durchgang (10) für die Halterung (12) des Thermoelementes (14) versehen ist. Das Gehäuse (7) ist von einem zweiten Faltenbalg (40) umgeben, der eine Zwischenkammer (41) dicht umschließt, die mit einem Druckmeßgerät (43) verbunden ist, so daß ein bei Auftreten einer Undichtigkeit am ersten Faltenbalg (38) in der Zwischenkammer (41) eintretender Druckanstieg erkennbar ist.

Rheinische Braunkohlenwerke AG.

Thermoelement für einen unter erhöhter Temperatur und Überdruck betriebenen Reaktionsraum

Die Erfindung betrifft ein Thermoelement, welches von einer relativ gegenüber dem Reaktionsraum verschiebbaren Halterung getragen und in den unter erhöhter Temperatur und Überdruck betriebenen Reaktionsraum einführbar ist, dessen Wandung mit einer Öffnung für den Durchgang des Thermoelementes und einer dieser Öffnung zugeordneten Dichtung versehen ist.

Beim Betrieb eines Vergasungsreaktors, beispielsweise eines Hochtemperatur-Winkler-Vergasungsreaktors, zum Vergasen von kohlenstoffhaltigem Material sind Organe, die von außen in den Reaktionsraum eingeführt sind, besonders hohen Beanspruchungen ausgesetzt. Neben Düsen für die Zuführung des Vergasungsmittels sind dies insbesondere Thermoelemente, die zur Überwachung der Temperaturen im Reaktionsraum in diesen hineinragen. Bisher angewandte Maßnahmen, beispielsweise die Anordnung des Thermoelementes in einer Ausnehmung der Wandung des Reaktionsraumes oder die Anbringung von Abschirmungen bei in den Reaktionsraum hineinragenden Thermoelementen haben die Bildung von Anbackungen von geschmolzenen Ascheteilchen an den Thermoelementen nicht verhindert. Derartige Anbackungen können so groß werden, daß zu ihrer Entfernung der Betrieb des Reaktors unterbrochen werden muß. Außerdem führen sie in jedem Fall zur Beeinträchtigung der Meßgenauigkeit des Thermoelementes.

...

Es ist daher zweckmäßig, das Thermoelement gegenüber dem Reaktionsraum verschiebbar anzuordnen derart, das es lediglich zur Durchführung der erforderlichen Messungen in den Reaktionsraum hinein bewegt wird, im übrigen aber sich in einer gegenüber dem Reaktionsraum soweit zurückgezogenen Lage befindet, daß Anbackungen oder sonstige Beeinträchtigungen nicht zu befürchten sind. In Anbetracht der Tatsache, daß die Temperaturen im Reaktionsraum bis zu 1200° C und mehr betragen bei Drücken, die bei einem Hochtemperatur-Winkler-Vergasungsreaktor zwischen 10 und 30 bar und bei einem Reaktor für die hydrierende Vergasung von Kohle zwischen 80 und 100 bar liegen können, werden an die Einrichtung, mittels welcher das Thermoelement verschoben wird, und an die erforderlichen Abdichtungen hohe Anforderungen gestellt. Der Einsatz von Stopfbuchsdichtungen hat sich als wenig brauchbar erwiesen, da selbst die Standzeiten von gekühlten Stopfbuchsdichtungen zu kurz sind. Unabhängig vom gewählten Dichtungsmittel muß in jedem Fall eine absolute Dichtheit des Reaktionsraumes gegenüber der Atmosphäre gewährleistet sein, da bei den hohen Drücken und Temperaturen eine kleine Undichtigkeit schwerwiegende Folgen nach sich ziehen kann.

Der Erfindung liegt die Aufgabe zugrunde, die Anordnung so zu treffen, daß bei einfacher Ausgestaltung eine einwandfreie Abdichtung gewährleistet ist und bei Auftreten einer Undichtigkeit die Möglichkeit besteht, Gegenmaßnahmen zu treffen, bevor das aus dem Reaktionsraum austretende Gas an die Atmosphäre gelangt. Ferner soll die Möglichkeit bestehen, auf einfache Weise das Auftreten von Undichtigkeiten festzustellen.

Zur Lösung dieser Aufgabe schlägt die Erfindung vor, daß die erste Dichtung außenseitig unter Belassung eines Abstandes von einer zweiten Dichtung umgeben und die von beiden Dichtungen begrenzte Zwischenkammer gegenüber Reaktionsraum und Atmosphäre abgedichtet ist. Dabei kann die Anordnung so getroffen sein, daß in Verlängerung der Öffnung in der Wandung nach außen sich eine erste Kammer erstreckt, die mit dem Reaktionsraum verbunden und von einem Gehäuse begrenzt ist, das sich nach außen an die Öffnung in der Wandung des Reaktionsraumes anschließt und an seiner dem Reaktionsraum abgekehrten Stirnwand mit einem Durchgang für die Halterung des Thermoelementes versehen ist, und der Durchgang durch die erste Dichtung und Zwischenkammer, die im wesentlichen koaxial zur ersten Kammerund zu dem diese begrenzenden Gehäuse angeordnet ist. Im einzelnen kann die Anordnung dabei so getroffen sein, daß die Zwischenkammer innerhalb eines Stutzens angeordnet ist, der das die erste Kammer begrenzende Gehäuse im wesentlichen koaxial umgibt und an seiner dem Reaktionsraum abgekehrten Stirnwand einen Durchgang für das Betätigungsmittel der Halterung für das Thermoelement aufweist.

Die Erfindung läßt sich dahingehend zusammenfassen, daß das Mittel zur Abdichtung des Durchganges für die Halterung des Thermoelementes einen Teil der Wandung einer Zwischenkammer darstellt, die ihrerseits gegenüber der Atmosphäre abgedichtet ist, so daß bei Auftreten von Undichtigkeiten das aus dem Reaktionsraum strömende Gas zunächst in der Zwischenkammer aufgefangen wird, so daß ausreichend Zeit zur Verfügung steht, um geeignete Gegenmaßnahmen zu ergreifen.

Vorteilhaft erfolgt die Abdichtung der ersten Kammer gegenüber der Zwischenkammer durch einen ersten, innerhalb des Gehäuses angeordneten Faltenbalg, dessen eines festes Ende den Durchgang am stirnseitige Ende des Gehäuses umgibt und dessen zweites verschiebbares Ende an der Halterung für

...

das Thermoelement angebracht ist, und die Zwischenkammer durch einen zweiten Faltenbalg begrenzt ist, der das Gehäuse etwa koaxial umgibt und mit seinem dem Reaktionsraum zugekehrten festen Ende an einem um das Gehäuse umlaufenden Flansch und an seinem anderen verschiebbaren Ende an einem an der stangenförmigen Halterung befestigten Flansch angebracht ist und die stangenförmige Halterung innerhalb des ersten und innerhalb des zweiten Faltenbalges etwa koaxial zu diesen verläuft.

Die Zwischenkammer kann unterAtmosphärendruck oder unter einem Überdruck stehen, der etwas geringer ist als der Überdruck im Reaktionsraum. Auf diese Weise wird die Beanspruchung des die erste Kamer begrenzenden Faltenbalges durch den Überdruck im Reaktionsraum verringert. Bei Auftreten einer Undichtigkeit in der die erste Kammer von der Zwischenkammer trennenden Wandung istder dadurch bewirkte Druckanstieg in der Zwischenkammer ausreichend groß daß er mittels einer Einrichtung zur Druckmessug ohne weiteres und sofort festgestellt werden kann, die an die Zwischenkammer angeschlossen ist. Die Anordnung der Zwischenkammer hat somit nicht nur den Vorteil, daß das bei einer Undichtigkeit aus der ersten Kammer austretende Gas nicht an die Atmosphäre gelangt. Vielmehr kann durch Überwachung des Druckes in der Zwischenkammer das Auftreten einer solchen Undichtigkeit sofort festgestellt werden, so daß auch geeignete Gegenmaßnahmen ohne Verzögerung getroffen werden können. Hinzu kommt, daß das Vorhandensein der Zwischenkammer es ggf. erlaubt, bei Auftreten einer Undichtigkeit zwischen erster Kammer und Zwischenkammer den Reaktorbetrieb noch eine gewisse Zeit weiterzuführen, bis bei einer Unterbrechung des Reaktorbetriebes aus anderen Gründen die Undichtigkeit beseitigt werden kann.

...

Die Erfindung sieht weiter die Möglichkeit vor, daß die erste Kammer mit einer Zuleitung für ein Sperrgas versehen ist. Normalerweise wird es sich dabei um ein Inertgas handelt, welches unter einem Druck steht, der höher ist als der Druck im Reaktionsraum. Die Mündung der Zuleitung für das Sperrgas soll dabei so angeordnet sein, daß letzteres den Austritt von Gas aus dem Reaktionsraum verhindert. D. h., daß eine nach Möglichkeit den Querschnitt der ersten Kammer ausfüllende Strömung des Sperrgases in Richtung auf den Reaktionsraum fliessen sollte.

Überdies besteht auch die Möglichkeit, die Zwischenkammer mit einer Zuleitung für ein Sperrgas zu versehen, so daß im Falle einer Undichtigkeit auch dieZwischenkammer mit Sperrgas gefüllt werden kann, welches unter einem Druck steht, der höher ist als der im Reaktionsraum. Damit kann verhindert werden, daß im Falle einer Undichtigkeit weiteres Gas aus dem Reaktionsraum in die Zwischenkammer einströmt. In beiden Fällen kann das Sperrgas selbsttätig zugeführt werden, sobald der Druck in der Zwischenkammer einen bestimmten Wert übersteigt.

Bei Anwendung der Lehre gemäß der Erfindung sind Stopfbuchsdichtungen nicht erforderlich, so daß Thermoelement und Halterung berührungslos durch beide Kammern und das Gehäuse geführt werden können, wobei die Führung der aus Thermoelement und Halterung bestehenden Einheit durch die Einrichtung erfolgt, über welche Halterung mit Thermoelement verschoben werden. Bei berührungsloser Hindurchführung von Halterung und Thermoelement besteht im allgemeinen auch keine Notwendigkeit, irgendwelche Kühleinrichtungen vorzusehen.

...

Bei teleskopartiger Anordnung der beiden Kammern zueinander kann die radiale Erstreckung der Gesamtanordnung merklich verkürzt werden. Dabei ist es vorteilhaft, daß bei einer Verschiebung des Thermoelementes in Richtung auf den Reaktionsraum der außerhalb des Gehäuses liegende Teil der Zwischenkammer eine Volumenverringerung erfährt bei gleichzeitiger Volumenvergrößerung des innerhalb des Gehäuses liegenden Teiles der Zwischenkammer. Dadurch wird erreicht, daß bei Verschieben des Thermoelementes in Richtung auf den Reaktiosnraum die Zwischenkammerin ihrer Gesamtheit nur eine geringe Verkleinerung ihres Volumens erfährt. Dies hat eine entsprechend geringe Druckerhöhung, die durch die Volumenänderung bewirkt wird, zur Folge. Es ist ohne weiteres möglich, die den Druck in der Zwischenkammerüberwachende Einrichtung so einzustellen, daß der durch die Verkleinerung der Zwischenkammer bewirkte Druckanstieg nicht zur Auslösung der Zufuhr von Sperrgas führt.

Die Faltenbälge bestehen beide aus einem Material, vorzugsweise Metall, welches den auftretenden Beanspruchungen gewachsen ist.

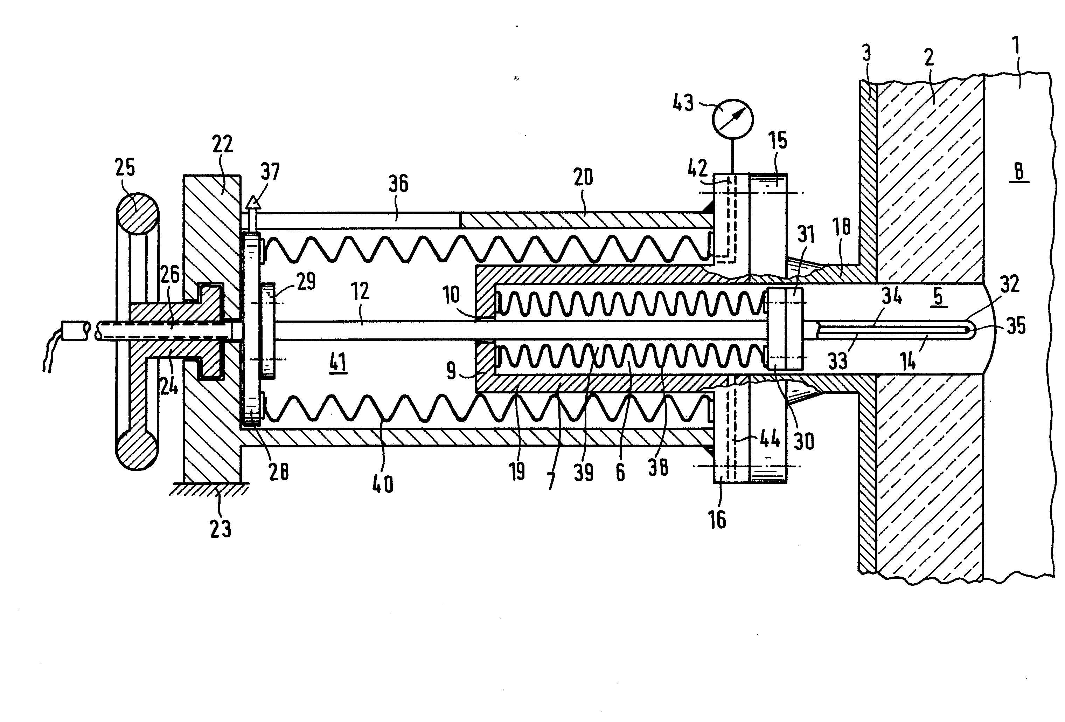

In der Zeichnung ist als Ausführungsbeispiel der Erfindung ein Längsschnitt durch eine Anordnung eines Thermoelementes an einem Reaktor im Schema dargestellt.

Ein Reaktor 1 zum Vergasen von kohlenstoffhaltigem Material im Wirbelbett weist eine feuerfeste Auskleidung und einen äußeren Mantel 3 aus Stahl auf. Feuerfeste Auskleidung 2 und Mantel 3 sind mit einem Durchgang 5 versehen, an den sich eine erste Kammer 6 anschließt, die außenseitig von einem Gehäuse 7 begrenzt ist. Das dem Reaktionsraum 8

0200910

abgekehrte Ende des Gehäuses 7 ist mit einer Stirnwand 9 versehen, die einen Durchgang 10 für die stangenförmige Halterung 12 des Thermoelementes 14 aufweist.

Das Gehäuse 7 wird von einem radialen, rohrförmigen Stutzen 18 des Mantels 3 und einem damit gasdicht verbundenen und fluchtenden Rohrabschnitt 19 gebildet. Der Stutzen 18 ist an seinem dem Reaktionsraum 8 abgekehrten Ende mit einem Flansch 15 versehen, an den unter Verwendung üblicher Mittel, beispielsweise einer Schraubverbindung, ein zweiter Flansch 16 angebracht ist. Letzterer trägt an seiner dem Reaktionsraum8 abgekehrten Seite den Rohrabschnitt 19 der außen von einem rohrförmigen Stutzen 20 umgeben ist, dessen anderes Ende durch einen Flansch 22 verschlossen ist. Die Gesamtanordnung, die vom Reaktor 1 auskragt, kann durch eine Abstützung 23 unterfangen sein.

Im Flansch 22 ist eine Gewindehülse 24 drehbar gelagert, die ihrerseits mit einem Handrad 25 fest verbunden ist. In der Gewindehülse 24 ist eine mit Außengewinde versehene Spindel 26 geführt, die koaxial zu den Durchgängen 5 und 10 angeordnet ist und an ihrem dem Reaktionsraum 8 zugekehrten Ende einen Führungs- und Halteflansch 28 trägt, der innerhalb des Stutzens 20 verschiebbar geführt ist. An dem Führungs- und Halteflansch 28 ist ein Zwischenflansch 29 befestigt, der die Halterung 12 für das Thermoelement 14 trägt. An ihrem dem Reaktionsraum 8 zugekehrten Ende ist die Halterung 12 mit einem Flansch 30 versehen, an welchem ein Flansch 31 angebracht ist, der seinerseits ein Schutzrohr 32 trägt, innerhalb dessen das Thermoelement 14 angeordnet ist, dessenelektrische Leiter 33, 34 an ihren dem Reaktionsraum zugekehrten Enden zu einer Meßspitze 35 zusammengeführt sind, die das eigentliche Thermoelement bildet. Die Leiter 33 und 34 sind durch die hohle Halterung 12 und durch die Hohlspindel 26 hindurchgeführt, an deren

...

dem Reaktionsraum 8 abgekehrten Ende sie austreten. Dort sind sie in geeigneter Weise mit nicht dargestellten elektrischen Meßinstrumenten verbunden.

Der Stutzen 20 weist einen axialen Einschnitt 36 auf, durch den ein mit dem Führungs- und Halteflansch 28 fest verbundener Zeiger 37 greift. Der Zeiger 37 sichert über den Flansch 28 die Lage der Spindel 26 in Umfangsrichtung, so daß sie einer Drehbewegung des Handrades 25 nicht folgen kann. Bei dessen Betätigungwerden die Spindel 26 und damit Flansch 28 sowie Zeiger 37 innerhalb des Einschnittes 36 in Richtung aufden Reaktionsraum 8 oder entgegengesetzt dazu axial verschoben. Die dabei zurückgelegte Wegstrecke kann an einer dem Einschnitt 36 zugeordneten Skala abgelesen werden. Der jeweiligen Stellung des Zeigers 37 entspricht die Lage des Thermoelementes 14 in bezug auf den Reaktionsraum 8.

Innerhalb des Gehäuses 7 ist ein erster Faltenbalg 38 etwa koaxial zum Gehäuse 7 und zur Halterung 12 angeordnet, dessen festes Ende innenseitig an der Stirnwand 9 des Gehäuses 7 so angebracht ist, daß es den Durchgang 10 für die Halterung 12 abdichtend umgibt. Das andere, dem Reaktionsraum 8 zugekehrte verschiebbare Ende des Faltenbalges 38 ist dicht mit dem von der Halterung 12 getragenen Flansch 30 verbunden, so daß im Ergebnis der vom Faltenbalg 38 begrenzte Innenraum 39, durch den hindurch sich die Halterung 12 erstreckt, gegenüber der ersten Kammer 6 und damit gegenüber dem Reaktionsraum 8 abgedichtet ist.

Ein zweiter Faltenbalg 40 ist an der dem Reaktionsraum 8 zugekehrten Stirnseite des Führungs- und Halteflansches 28 verschiebbar und mit seinem anderen festen Ende am Flansch 16 jeweils gasdicht derart angebracht, daß er das Gehäuse 7 gemäß der Darstellung in der Zeichnung umgibt. Der Faltenbalg 40 kann innerhalb des Stutzens 20 geführt sein. Entsprechendes gilt für eine mögliche Führung an der Außenseite des Gehäuses 7. Der Faltenbalg 40 schließt eine Zwischenkammer 41 ein, zu welcher auch der Innenraum 39 des Faltenbalges 38 gehört. Bei der in der Zeichnung dargestellten zurückgezogenen Lage des Thermoelementes 14 weist der Faltenbalg 40 eine etwas größere axiale Länge auf als der Faltenbalg 38.

Der Flansch 16 ist mit einer Bohrung 42 versehen, deren eines Ende mit der Zwischenkammer 41 in Verbindung steht. Außerhalb des Flansches 16 ist die Bohrung 42 mit einer Druckmeßeinrichtung 43 und gegebenenfalls mit einer nicht dargestellten Zuleitung für ein Sperrgas verbunden. Letztere ist mit einem Ventil versehen, das in Abhängigkeit von dem durch die Druckmeßeinrichtung 43 angezeigten Druck in der Zwischenkammer geöffnet wird. Weiterhin weist der Flansch 16 eine zweite Bohrung 44 auf, die in die erste Kammer 6 mündet und die ebenfalls an eine Quelle für ein Sperrgas über ein Ventil oder dgl. anschließbar ist, welches auch durch die Druckmeßeinrichtung 43 oder in Abhängigkeit von deren Anzeige betätigbar ist.

Durch Betätigung des Handrades 25 wird die Halterung 12 mit dem Thermoelement 14 über die Spindel 26 gegenüber dem Reaktionsraum 8 verschoben. Zur Durchführung einer Temperaturmessung wird das Thermoelement 14 aus der in der Zeichnung dargestellten Lage nach rechts in den Bereich des Reaktionsraumes 8 hinein verschoben, wobei der Faltenbalg 38 entsprechend gestreckt und der Faltenalg 40 entsprechend zusammengedrückt wird. Während der Innenraum 39 des Faltenbalges 38 dabei eine gewisse Vergrößerung erfährt, wird ein Teil der durch das Zusammendrücken des Faltebalges 40 bewirkten Verringerung des Volumens der Zwischenkammer 41 mit einem geringfügige Druckanstieg kompensiert, da der

...

Innenraum 39 über den Durchgang 10 mit dem außerhalb des Gehäusess 7 befindlichen Bereich der Zwischenkammer 41 in Verbindung steht. Nach Beendigung der Messung wird das Thermoelement 14 durch entsprechende Betätigung des Handrades 25 wieder in seine in der Zeichnung dargestellte Lage zurückbewegt, in welcher es sich innerhalb des Durchganges 5 befindet und somit den Einflüssen der im Reaktionsraum 8 ablaufenden Reaktionen zumindest nicht unmittelbar ausgesetzt ist, wenngleich bezüglich Druck und weitgehend auch hinsichtlich Temperatur im Bereich des Durchganges 5 die gleichen Bedingungen herrschen wie im Reaktionsraum 8. D. h., daß der Faltenbalg 38 außenseitig ständig mit dem Druck beaufschlagt ist, der im Reaktionsraum 8 herrscht. Die Zwischenkammer 41 kann mit einem gewissen Überdruck beaufschlagt sein, um den von außen auf den Faltenbalg 38 in der ersten Kammer 6 einwirkenden Druck soweit erforderlich zu kompensieren.

Eine möglicherweise und in der Regel zuerst am Faltenbalg 38 auftretende Undichtigkeit würde zu einem Gasstrom aus dem Reaktionsraum 8 durch die erste Kammer 6 in den Innenraum 39, d. h., in die Zwischenkammer 41 hinein führen. Dabei erhöht sich der Druck innerhalb der Zwischenkammer 41 mit der Folge einer entsprechenden Änderung der Anzeige der Druckmeßeinrichtung 43. Eine Druckerhöhung über einen bestimmten Grenzwert hinaus wird dazu benutzt, Sperrgas über die beiden Bohrungen 42 und 44, und zwar vorzugsweise überdie Bohrung 44 in die erste Kammer 6 und/oder gelegentlich über die Bohrung 42 in die Zwischenkammer 41 einzuführen. Das über die Bohrung 44 zugeführte Sperrgas dient dazu, ein Eindringen von Gas aus dem Reaktionsraum 8 in die erste Kammer 6 hinein zumindest zu reduzieren. Das über die Bohrung 42 zugeführte Sperrgas tritt unter der Voraussetzung, daß es innerhalb der Zwischenkammer 41 ein Druckniveau bewirkt, das zumindest geringfügig über dem

. . .

Druckniveau im Reaktionsraum 8 liegt, durch den Durchgang 10 in den Innenraum 39 des Faltenbalges 38 und durch ein Leck in diesem in die erste Kammer 6 ein, aus der es in Richtung auf den Reaktionsraum 8 strömt und somit ein weiteres Eindringen von Gas aus dem Reaktionsraum 8 durch den Durchgang 5 in die erste Kammer 6 verhindert.

Im Ergebnis stellt der Faltenbalg 40 eine zusätzliche Abdichtung dar, die verhindert, daß bei Auftreten einer Undichtigkeit am Faltenbalg 38 Gas aus dem Reaktionsraum 8 unmittelbar in die Atmosphäre gelangen kann.

Patentansprüche:
==================================

1. Thermoelement, welches von einer relativ gegenüber einem Reaktionsraum (8) verschiebbaren Halterung (12) getragen und in den unter erhöhter Temperatur und Überdruck betriebenen Reaktionsraum (8) einführbar ist, dessen Wandung (2, 3) mit einer Öffnung (5) für den Durchgang des Thermoelementes (14) und einer dieser Öffnung zugeordneten Dichtung (38) versehen ist, dadurch gekennzeichnet, daß die erste Dichtung (38) außenseitig unter Belassung eines Zwischenkammer (41) von einer zweiten Dichtung (40) umgeben und die von beiden Dichtungen begrenzte Zwischenkammer(41) gegenüber Reaktionsraum (8) und Atmosphäre abgedichtet ist.

2. Thermoelement nach Anspruch 1, dadurch gekennzeichnet, daß in Verlängerung der Öffnung (5) in der Wandung (2, 3) sich eine erste Kammer (6) erstreckt, die mit dem Reaktionsraum (8) verbunden und von einem Gehäuse (7) begrenzt ist, das sich nach außen an die Öffnung (5) in der Wandung (2, 3) des Reaktionsraumes (8) anschließt und an seiner dem Reaktionsraum (8) abgekehrten Stirnwand (9) mit einem Durchgang (10) für die Halterung (12) des Thermoelementes (14) versehen ist, und der Durchgang (10) mittels der ersten Dichtung (38) abgedichtet ist und die Zwischenkammer (41) im wesentlichen koaxial zur ersten Kammer (6) und zu dem diese begrenzenden Gehäuse (7) angeordnet ist.

3. Thermoelement nach Anspruch 1, dadurch gekennzeichnet, daß die Zwischenkammer (41) innerhalb eines Stutzens (20) angeordnet ist, der das die erste Kammer (6) begrenzende Gehäuse (7) im wesentlichen koaxial umgibt und an seiner

...

dem Reaktionsraum (8) abgekehrten Stirnwand einen Durchgang für das Betätigungsmittel der Halterung (12) für das Thermoelement (14) aufweist.

4. Anordnung nach Anspruch 1, dadurch gekennzeichnet, daß die Abdichtung der ersten Kammer (6) gegenüber der Zwischenkammer (41) durch einen ersten, innerhalb des Gehäuses (7) angeordneten Faltenbalg (38) erfolgt, dessen festes Ende den Durchgang (10) am stirnseitigen Ende des Gehäuses(7) umgibt und dessen verschiebbares Ende an der Halterung für das Thermoelement (14) angebracht ist, und die Zwischenkammer (41) durch einen zweiten Faltenbalg (40) begrenzt ist, der das Gehäuse (7) etwa koaxial umgibt und mit seinem dem Reaktionsraum (8) zugekehrtenfesten Ende an einem um das Gehäuse (7) umlaufenden Flansch (16) und an seinem anderen verschiebbaren Ende an einem an der stangenförmigen Halterung (12) befestigten Flansch (28) angebracht ist und die Halterung (12) innerhalb des ersten (38) und innerhalb des zweiten Faltenbalges (40) etwa koaxial zu diesen verläuft.

5. Thermoelement nach einem der vorhergehenden Ansprüche, dadurch gekennzeichnet, daß die Zwischenkammer (41) unter einem Überdruck steht, der merklich geringer ist als der Überdruck im Reaktionsraum (8).

6. Thermoelement nach einem der vorhergehenden Ansprüche, dadurch gekennzeichnet, daß die Zwischenkammer (41) an eine Einrichtung (43) zur Druckmessung angeschlossen ist.

7. Thermoelemet nach einem der vorhergehenden Ansprüche, dadurch gekennzeichnet, daß die erste Kammer (6) mit einer Zuleitung (44) für ein Sperrgas versehen ist.

...

8. Thermoelement nach einem der vorhergehenden Ansprüche, dadurch gekennzeichnet, daß die Zwischenkammer (41) mit einer Zuleitung (42) für ein Sperrgas versehen ist.

...